# EUROPÄISCHE PATENTANMELDUNG

(11) **EP 2 952 400 A1**
(43) Veröffentlichungstag der Anmeldung: **09.12.2015**
(21) Anmeldenummer: 14170898.2
(22) Anmeldetag: 03.06.2014
(51) Int. Cl.: B60T 17/22, F16D 65/00

(54) **Vorrichtung zur umweltgerechten Entleerung von Betriebsflüssigkeit**

(71) Anmelder: SET Schröder GmbH, 52349 Düren (DE)
(72) Erfinder: Schröder, Ulrich, 52353 Düren-Mariaweiler (DE)
(74) Vertreter: Schmelcher, Thilo

(57) **Zusammenfassung**

Die Erfindung betrifft eine Vorrichtung zur umweltgerechten Entleerung von Betriebsflüssigkeit (BF), wobei die Betriebsflüssigkeit aus Betriebsflüssigkeitsbehältern über eine Entleerungsöffnung entnommen wird, wobei die Entleerungsöffnung eine Verschraubung aufweist, aufweisend
• einen ersten Antriebsabschnitt (A₁) geeignet zur Verbindung mit der Verschraubung und geeignet zum Öffnen der Verschraubung,
• wobei der Antriebsabschnitt (A₁) eine erste Öffnung (Ö₁) aufweist, um Betriebsflüssigkeit (BF) in einen Ableitkanal (AK) einzulassen,
• wobei der Ableitkanal (AK) weiterhin eine zweite Öffnung (Ö₂) aufweist, durch die die eingelassen Betriebsflüssigkeit (BF) wieder austreten kann,
• wobei im Ableitkanal (AK) eine Verschlusseinrichtung (VE) vorgesehen ist, die den Fluss durch den Ableitkanal (AK) nur in Richtung zur zweiten Öffnung (Ö₂) hin erlaubt.

## Beschreibung

Die Erfindung betrifft eine Vorrichtung zur umweltgerechten Entleerung von Betriebsflüssigkeit.

### Hintergrund der Erfindung

In vielen Bereichen der Technik, insbesondere in der Kraftfahrzeugtechnik aber auch im allgemeinen Maschinenbau, werden zahlreiche Geräte verwendet, die Betriebsflüssigkeiten benötigen. Häufig unterliegen diese Betriebsflüssigkeiten einem Alterungs- oder Verschleißprozess sodass diese Flüssigkeiten gewechselt werden müssen. Auch kann es notwendig sein, dass zu Wartungs- oder Reparaturarbeiten die jeweiligen Betriebsflüssigkeiten entfernt werden müssen.

Dabei ist häufig festzustellen, dass die Betriebsflüssigkeiten umweltgefährdend sind und/oder ein direkter Kontakt mit den Betriebsflüssigkeiten zu vermeiden ist.

Gleichzeitig ist jedoch festzustellen, dass in immer größerem Masse die Bauräume verkleinert werden. Dies führt dazu, dass Entleerungsöffnungen zum Ablassen einer Betriebsflüssigkeit immer schwierig zu erreichen sind und/oder die die sichere Aufnahme der Betriebsflüssigkeiten nicht oder nur unzureichend möglich ist. Hierdurch entstehen sowohl Gefahren für die Person, die mit dieser Aufgabe betraut ist, als auch für die Umwelt, als auch für das Gerät / die Maschine, da häufig andere Bauteile in der Umgebung der Entleerungsöffnung nicht dauerhaft den Betriebsflüssigkeiten wiederstehen oder aber andere unerwünschte Effekte, wie z.B. eine Verschmutzung, auftreten.

### Kurzdarstellung der Erfindung

Die Aufgabe wird gelöst durch eine Vorrichtung zur umweltgerechten Entleerung von Betriebsflüssigkeit, wobei die Betriebsflüssigkeit aus Betriebsflüssigkeitsbehältern über eine Entleerungsöffnung entnommen wird, wobei die Entleerungsöffnung eine Verschraubung aufweist. Die Vorrichtung weist einen ersten Antriebsabschnitt auf, der geeignet ist zur Verbindung mit der Verschraubung und geeignet zum Öffnen der Verschraubung, wobei der Antriebsabschnitt eine erste Öffnung aufweist, um Betriebsflüssigkeit in einen Ableitkanal einzulassen. Der Ableitkanal weist wiederum eine zweite Öffnung auf, durch die die eingelassen Betriebsflüssigkeit wieder austreten kann. Weiterhin ist im Ableitkanal eine Verschlusseinrichtung vorgesehen, die den Fluss durch den Ableitkanal nur in Richtung zur zweiten Öffnung hin erlaubt.

In einer Ausführungsform der Erfindung ist ein Auffanggefäß mit dem Ableitkanal verbunden.

Gemäß einer weiteren Ausführungsform der Erfindung ist der Antriebsabschnitt zur Verbindung mit einer Mehrkantschraube geeignet.

In einer weiteren Ausführungsform der Erfindung ist die Verschlusseinrichtung als ein Rückschlagventil ausgebildet.

Gemäß noch einer weiteren Ausführungsform der Erfindung ist die Verschlusseinrichtung als ein Rückschlagventil mit einer Kugel oder einer Klappe ausgebildet ist.

In noch einer weiteren Ausführungsform der Erfindung weist die Vorrichtung weiterhin einen zweiten Antriebsabschnitt auf, mit dem die Vorrichtung in Drehbewegung versetzt werden kann, wenn sie mit der Verschraubung der Entleerungsöffnung verbunden ist.

Gemäß einer Ausformung dieser Ausführungsform, ist der zweite Antriebsabschnitt zur Verbindung mit einem Maul- oder einem Ringschlüssel geeignet.

In noch einer weiteren Ausformung ist benachbart zum zweiten Antriebsabschnitt ein Abschnitt vorgesehen, der einen geringeren äußeren Durchmesser als der zweite Antriebsabschnitt aufweist, sodass das Umsetzen eines Maul- oder Ringschlüssels ermöglicht wird.

Gemäß noch einer weiteren Ausführungsform der Erfindung ist die Betriebsflüssigkeit ausgewählt aus einer Gruppe aufweisend Bremsflüssigkeit, Schmierstoffe, Kraftstoffe.

### Kurzdarstellung der Figuren

Nachfolgend wird die Erfindung näher unter Bezug auf die Figuren erläutert. In diesen zeigt:
Fig. 1 eine Schnittdarstellung einer ersten erfindungsgemäßen Ausführungsform,
Fig. 2 eine weitere Schnittdarstellung der ersten erfindungsgemäßen Ausführungsform,
Fig. 3 eine Schnittdarstellung einer zweiten erfindungsgemäßen Ausführungsform, und
Fig. 4 eine weitere Schnittdarstellung der zweiten erfindungsgemäßen Ausführungsform.

### Ausführliche Beschreibung

Soweit nachfolgend der Singular verwendet wird ist in aller Regel auch der Plural mit umfasst. Weiterhin, soweit nachfolgend Ausführungsformen dargestellt werden sind jegliche Aspekte einer Ausführungsform ohne weiteres auch in anderen Ausführungsformen verwendbar, soweit nichts explizit als Alternative ausgeschlossen.

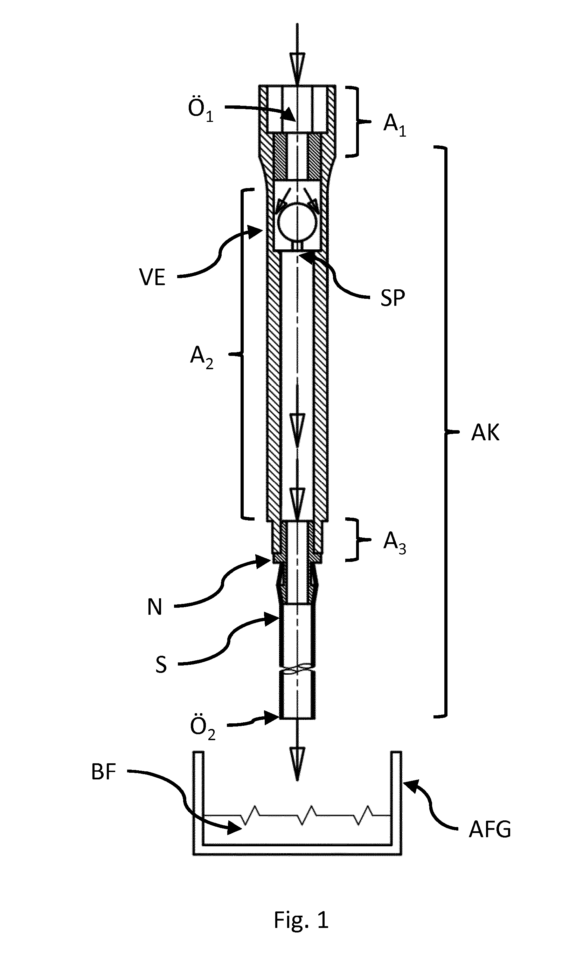

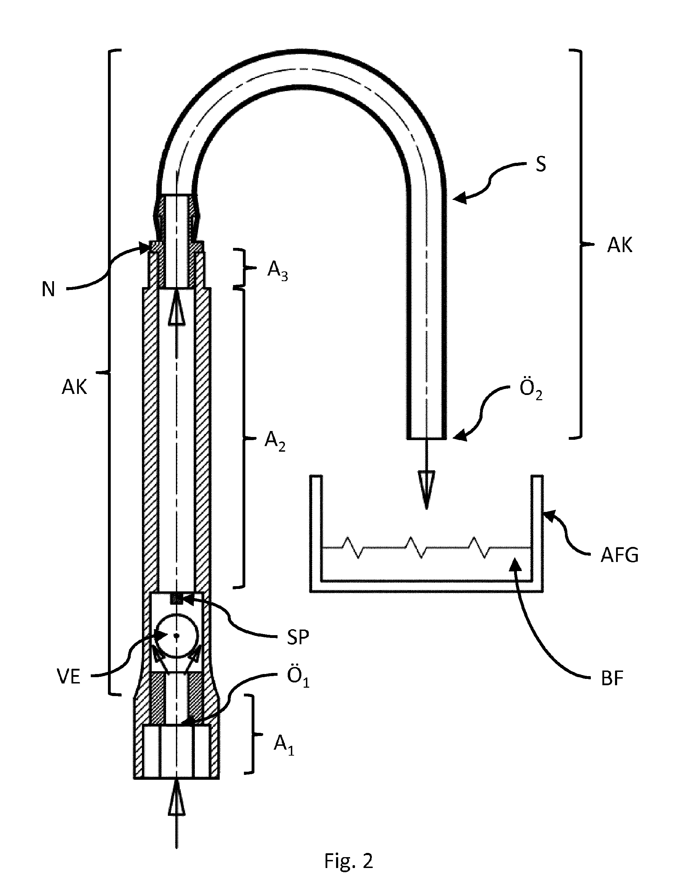

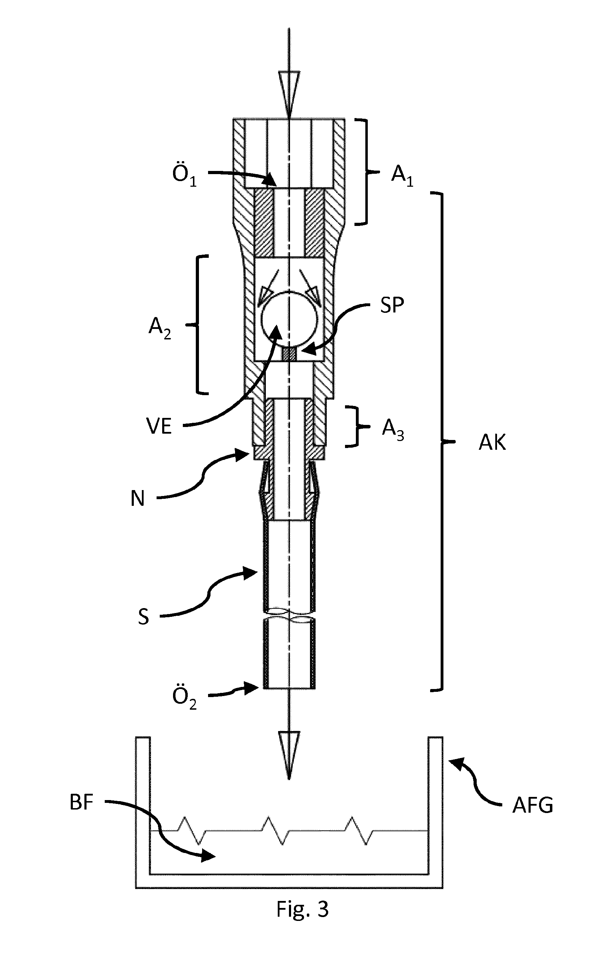

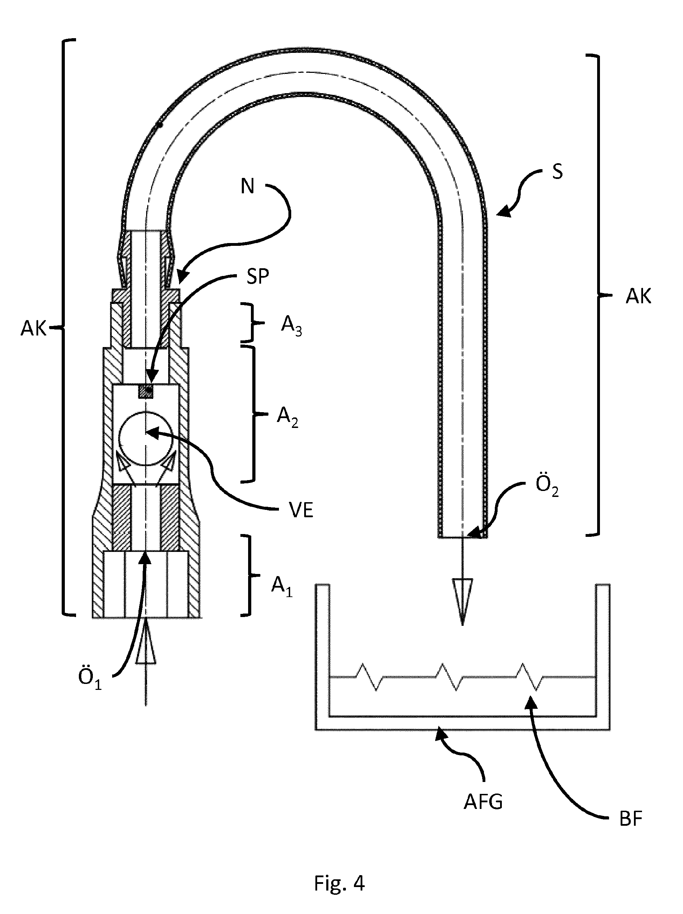

In Figur 1 und 2 ist eine erste Ausführungsform und in Figur 3 und 4 eine zweite Ausführungsform der Erfindung gezeigt.

Dabei beziehen sich die nachfolgenden Ausführungen jeweils auf alle Ausführungsformen, soweit explizit nichts anderes angegeben ist.

Die erfindungsgemäßen Vorrichtungen sind zur umweltgerechten Entleerung von Betriebsflüssigkeit BF geeignet. Die Betriebsflüssigkeit BF wird dabei aus einem Betriebsflüssigkeitsbehälter über eine Entleerungsöffnung entnommen.

Insbesondere in der Kraftfahrzeugtechnik aber auch im allgemeinen Maschinenbau, werden zahlreiche Geräte verwendet, die Betriebsflüssigkeiten benötigen. Häufig unterliegen diese Betriebsflüssigkeiten einem Alterungs- oder Verschleißprozess sodass diese Flüssigkeiten gewechselt werden müssen. Auch kann es notwendig sein, dass zu Wartungs- oder Reparaturarbeiten die jeweiligen Betriebsflüssigkeiten entfernt werden müssen.

Um eine Entleerung zu ermöglichen, die möglichst vollständig sein soll, wird in aller Regel an der tiefsten Stelle des Betriebsflüssigkeitsbehälter eine Entleerungsöffnung vorgesehen, die mit einer Verschraubung versehen ist.

Es kann jedoch auch sein, dass die Betriebsflüssigkeit BF unter Druck steht. Dies ist z.B. bei hydraulischen Bremsanalagen häufig anzutreffen, wo typischerweise Drücke von 0,5 bis 2,5 bar (0,5 bis 2,5 hPa) auftreten.

Wird die Verschraubung gelöst, so kann die im Betriebsflüssigkeitsbehälter befindliche Betriebsflüssigkeit BF durch die Schwerkraft abfließen und dabei vollständig entnommen werden. Somit wird ein vollständiger Wechsel der betreffenden Betriebsflüssigkeit BF ermöglicht.

Soweit die Erfindung sich auf Entleerungsöffnungen bezieht ist dabei jegliche Form einer Entleerungseinrichtung, insbesondere auch Entleerungsventile wie sie z.B. bei hydraulischen Bremsanlagen anzutreffen sind, mitumfasst.

Bisher wurden diese Verschraubungen einfach mit einem entsprechenden Werkzeug, wie z.B. einem Maul- oder Ringschlüssel gelöst. Dabei floss jedoch die Betriebsflüssigkeit beim Abfließen unkontrolliert sowohl über den Maul- oder Ringschlüssel und damit auch auf die Hände des jeweiligen Monteurs als auch auf umgebende Bauteile.

Somit war stetes eine Gefährdung und/oder Verschmutzung der bedienenden Person, der umgebenden Bauteile als auch der Umwelt gegeben.

Diese Probleme werden durch Bauraumbegrenzung zusätzlich verschärft, da nun ein Aufnahme der Betriebsflüssigkeit BF über einen entsprechenden Aufnahmetrichter a nicht oder nur unzureichend möglich ist. Insbesondere wird das Öffnen der Verschraubung durch die Bauraumbeschränkungen so stark behindert, dass nunmehr unter Umständen ganze Bauteile für einen einfachen Wechsel entfernt werden müssen, da sonst die Verschraubungen nur äußerst zeitraubend, z.B. unter vielmaligem Umsetzen eines Maul- oder Ringschlüssels, möglich ist.

Dies ist z.B. bei modernen Kraftfahrzeugen anzutreffen, bei denen die Bremsflüssigkeit gewechselt werden soll. War es bisher möglich die Verschraubung ohne Abnahme der Felgen abzulassen, ist dies nunmehr kaum noch möglich.

Um diesen Problemen zu begegnen weist die Vorrichtung einen ersten Antriebsabschnitt geeignet zur Verbindung mit der Verschraubung und geeignet zum Öffnen der Verschraubung auf, wobei der Antriebsabschnitt A₁ eine erste Öffnung Ö₁ aufweist, um Betriebsflüssigkeit BF in einen Ableitkanal AK einzulassen.

D.h. der erste Antriebsabschnitt wird im Wesentlichen formschlüssig gestaltet, so dass er eine entsprechende Verschraubung antreiben kann als auch eine fluidische Verbindung zum Betriebsflüssigkeitsbehälter bereitstellen kann.

Weiterhin weist der Ableitkanal AK weiterhin eine zweite Öffnung Ö₂ auf, durch die die eingelassen Betriebsflüssigkeit BF wieder austreten kann.

D.h. eine in den Antriebskanal eingetreten Betriebsflüssigkeit BF kann durch den Ableitkanal AK fließen.

Um beim Abnehmen der Vorrichtung zu verhindern, dass noch im Ableitkanal AK eventuell vorhandene Betriebsflüssigkeit BF wieder durch die erste Öffnung Ö₁ austreten kann und somit erneut eine Gefahr wie zuvor beschrieben darzustellen, weist die Vorrichtung weiterhin im Ableitkanal AK eine Verschlusseinrichtung VE auf, die den Fluss durch den Ableitkanal AK nur in Richtung zur zweiten Öffnung Ö₂ hin erlaubt.

Der genaue Ort der Verschlusseinrichtung VE muss dabei nicht wie in den Figuren gezeigt benachbart zum ersten Öffnung Ö₁ sein, sondern kann sich an jeder beliebigen Stelle des Ablasskanals befinden. Bevorzugt ist die Stelle jedoch möglichst in der Nachbarschaft der ersten Öffnung platziert.

Mit der vorgestellten Vorrichtung ist es nunmehr möglich auch bei kleinen Bauräumen Verschraubungen von Entleerungsöffnungen zu öffnen und Betriebsflüssigkeiten BF sicher aufzunehmen, ohne dass zu einer Gefährdung kommt.

Der Ableitkanal AK kann dabei eine geeignete Gestaltung aufweisen. Z.B. kann der Ableitkanal abschnittsweise flexibel sein und z.B. als Schlauch S ausgebildet sein. Der obere Teil des Ablasskanals AK, der unter anderem den ersten Antriebsabschnitt A₁ aufweist, ist in aller Regel nicht flexibel.

Der Ableitkanal kann sodann entweder an seiner zweiten Öffnung Ö₂ so platziert sein, dass die durch den Ableitkanal fließende Betriebsflüssigkeit BF in ein Auffanggefäß AFG tropft oder fließt oder aber das Auffanggefäß kann unmittelbar mit dem Ableitkanal AK verbunden sein. Ohne weiteres kann auch vorgesehen sein, dass das Auffanggefäß einen Unterdruck aufweist und so dass Abfließen der Betriebsflüssigkeit in das Auffanggefäß AFG unterstützt.

Von besonderem Vorteil ist, dass sich der Antriebsabschnitt A₁ so formschlüssig ausgestalten lässt, dass er zur Verbindung mit einer Mehrkantschraube, insbesondere einer 4-, 6-, 8- 10- oder 12-Kantschraube, geeignet ist. D.h. die erfindungsgemäße Vorrichtung kann auch mit heutigen handelsüblichen Entleerungsöffnungen betreiben werden.

Die Verschlusseinrichtung VE kann wie in den Figuren gezeigt als Rückschlagventil mit einer Kugel oder (nicht gezeigt) mit einer Klappe ausgeführt sein.

Beispielsweise kann die Verschlusseinrichtung VE eine Kugel aufweisen, die geeignet ist den Ablasskanal AK in Richtung zur ersten Öffnung Ö₁ hin zu verschließen, während z.B. durch einen eingebrachten Steg oder dergleichen verhindert wird, dass die Kugel den Ablasskanal AK in Richtung zur zweiten Öffnung Ö₂ hin verschließt.

Weiterhin kann die Verschlusseinrichtung VE weiterhin eine (nicht gezeigte) Federunterstützung aufweisen. Hierdurch können besonders einfache Ausgestaltung bereitgestellt werden, die ohne große Bauraumanforderungen integrierbar ist und zudem kostengünstig herzustellen ist.

Vorteilhafterweise kann die erfindungsgemäße Vorrichtung auch einen zweiten Antriebsabschnitt A₂ aufweisen, mit dem die Vorrichtung in Drehbewegung versetzt werden kann, wenn sie mit der Verschraubung der Entleerungsöffnung verbunden ist. D.h. durch den zweiten Antriebsabschnitt kann die Vorrichtung selbst gedreht werden. Da die Vorrichtung mit der Verschraubung der Entleerungsöffnungen verbunden ist, wird diese über den ersten Antriebsabschnitt A₁ wegen der steifen Ausführung des oberen Abschnittes der Vorrichtung mitgedreht. Dabei ist der obere Teil des Ablasskanals AK wie in den Figuren 1 und 3 gezeigt in aller Regel aus einem geeigneten Material, wie z.B. einem Werkzeugstahl hergestellt.

So kann z.B. der zweite Antriebsabschnitt A₂ zur Verbindung mit einem Maul- oder einem Ringschlüssel geeignet sein. D.h. vorhandenes Werkezeug kann ohne weiteres weiterverwendet werden.

In einer besonders vorteilhaften Ausgestaltung der Vorrichtung ist benachbart zum zweiten Antriebsabschnitt A₂ ein weitere Abschnitt A₃ vorgesehen, der einen geringeren äußeren Durchmesser als der zweite Antriebsabschnitt A₂ aufweist, sodass das Umsetzen eines Maul- oder eines Ringschlüssels ermöglicht wird.

D.h. es kann ohne den jeweiligen Maul- oder Ringschlüssel komplett neu ansetzen zu müssen nun einfach umgesetzt werden. Dies ist insbesondere bei kleinen Bauräumen ein enormer Vorteil, da nun eine schnelle Öffnung (als auch Schließung) der Verschraubung der Entleerungsöffnung ermöglicht wird, ohne dass es einer Demontage von weiteren Bauteilen bedürfte. Insbesondere bei Ringschlüsseln kann nun einfach der Ratschenbereich für das Umsetzen hin zu Abschnitt A₃ bewegt werden, um anschließend die Ratsche nach zurückdrehen in eine günstige Position wieder auf den Abschnitt A₂ zu schieben, um erneut die Verschraubung der Entleerungsöffnung weiter zu drehen. Dies ist insbesondere dann von Vorteil, wenn die Verschraubung nicht im Sichtfeld der bedienenden Person befindlich ist, da nun ein langwieriges Ertasten der Verschraubung bei jeder Teildrehbewegung entfällt.

Durch die universelle Ausgestaltung der Verrichtung ist sie für eine Vielzahl von unterschiedlichen Betriebsflüssigkeiten BF geeignet. Insbesondere ist jedoch eine Verwendung in Bezug auf Bremsflüssigkeit, Schmierstoffe, Kraftstoffe vorteilhaft.

Soweit der Ablasskanal AK einen schlauchartigen Abschnitt S aufweist, kann dieser schlauchartigen Abschnitt S aus jedem geeignetem Material hergestellt sein. Z.B. kann der schlauchartige Abschnitt S ein Kunststoffmaterial aufweisen, wobei die Auswahl abhängig von der abzuleitenden Betriebsflüssigkeit BF gewählt ist. Dann kann der schlauchartige Abschnitt S wie in den Figuren gezeigt über einen geeigneten Nippel N verbunden sein.

Alternativ kann auch ein flexibler Metallschlauch vorgesehen sein. Ein solcher Metallschlauch wird jedoch in aller Regel über eine geeignete Verschraubung verbunden sein.

Mit der vorgestellten Vorrichtung ist es nunmehr möglich eine umweltgerechte Beseitigung von Betriebsflüssigkeiten auch bei kleinen Bauräumen bereitzustellen.

**Bezeichnungsliste**

| | |
|---|---|
| ersten Antriebsabschnitt | A₁ |
| zweiter Antriebsabschnitt | A₂ |
| Abschnitt | A₃ |
| erste Öffnung | Ö₁ |
| zweite Öffnung | Ö₂ |
| Betriebsflüssigkeit | BF |
| Ableitkanal | AK |
| Verschlusseinrichtung | VE |
| Nippel | N |
| Schlauch | S |
| Auffanggefäß | AFG |
| Sperre | SP |

## Patentansprüche

1. Vorrichtung zur umweltgerechten Entleerung von Betriebsflüssigkeit (BF), wobei die Betriebsflüssigkeit aus Betriebsflüssigkeitsbehältern über eine Entleerungsöffnung entnommen wird, wobei die Entleerungsöffnung eine Verschraubung aufweist, aufweisend
• einen ersten Antriebsabschnitt (A₁) geeignet zur Verbindung mit der Verschraubung und geeignet zum Öffnen der Verschraubung,
• wobei der Antriebsabschnitt (A₁) eine erste Öffnung (Ö₁) aufweist, um Betriebsflüssigkeit (BF) in einen Ableitkanal (AK) einzulassen,
• wobei der Ableitkanal (AK) weiterhin eine zweite Öffnung (Ö₂) aufweist, durch die die eingelassen Betriebsflüssigkeit (BF) wieder austreten kann,
• wobei im Ableitkanal (AK) eine Verschlusseinrichtung (VE) vorgesehen ist, die den Fluss durch den Ableitkanal (AK) nur in Richtung zur zweiten Öffnung (Ö₂) hin erlaubt.

2. Vorrichtung gemäß Anspruch 1, **dadurch gekennzeichnet, dass** weiterhin ein Auffanggefäß (AFG) mit dem Ableitkanal (AK) verbunden ist.

3. Vorrichtung nach Anspruch 1 oder 2, **dadurch gekennzeichnet, dass** der Antriebsabschnitt (A₁) zur Verbindung mit einer Mehrkantschraube geeignet ist.

4. Vorrichtung nach einem der vorhergehenden Ansprüche, **dadurch gekennzeichnet, dass** die Verschlusseinrichtung (VE) als ein Rückschlagventil ausgebildet ist.

5. Vorrichtung nach einem der vorhergehenden Ansprüche, **dadurch gekennzeichnet, dass** die Verschlusseinrichtung (VE) als ein Rückschlagventil mit einer Kugel oder einer Klappe ausgebildet ist.

6. Vorrichtung nach einem der vorhergehenden Ansprüche, **dadurch gekennzeichnet, dass** die Vorrichtung weiterhin einen zweiten Antriebsabschnitt (A₂) aufweist, mit dem die Vorrichtung in Drehbewegung versetzt werden kann, wenn sie mit der Verschraubung der Entleerungsöffnung verbunden ist.

7. Vorrichtung nach Anspruch 7, **dadurch gekennzeichnet, dass** der zweite Antriebsabschnitt (A₂) zur Verbindung mit einem Maul- oder einem Ringschlüssel geeignet ist.

8. Vorrichtung nach Anspruch 8, **dadurch gekennzeichnet, dass** benachbart zum zweiten Antriebsabschnitt (A₂) ein Abschnitt (A₃) vorgesehen ist, der einen geringeren äußeren Durchmesser als der zweite Antriebsabschnitt (A₂) aufweist, sodass das Umsetzen eines Maul- oder eines Ringschlüssels ermöglicht wird.

9. Vorrichtung nach einem der vorhergehenden Ansprüche, **dadurch gekennzeichnet, dass** die Betriebsflüssigkeit (BF) ausgewählt ist aus einer Gruppe aufweisend Bremsflüssigkeit, Schmierstoffe, Kraftstoffe.
